# NEUE EUROPÄISCHE PATENTSCHRIFT

(11) **EP 1 308 428 B2**
(45) Veröffentlichungstag und Bekanntmachung des Hinweises auf die Entscheidung über den Einspruch: **11.10.2017**
(45) Hinweis auf die Patenterteilung: 22.01.2014
(21) Anmeldenummer: 02023106.4
(22) Anmeldetag: 15.10.2002
(51) Int. Cl.: C04B 24/42, C04B 41/64, C04B 32/02

(54) **Korrosionsinhibitor für Stahlbeton**
Corrosion inhibitor for steel-reinforced concrete
Inhibiteur de corrosion pour béton armé

(30) Priorität: 05.11.2001 DE 10153803
(43) Veröffentlichungstag der Anmeldung: 07.05.2003
(73) Patentinhaber: Evonik Degussa GmbH, 45128 Essen (DE)
(72) Erfinder: Standke, Burkhard, Dr., 79540 Lörrach (DE); McGettigan, Edward, Staten Island, NY 10312 (US)
(74) Vertreter: Bendele, Tanja

(56) Entgegenhaltungen:
- EP-A- 0 398 356
- EP-A1- 0 957 071
- WO-A1-95//16752
- DE-A1- 2 818 445
- DE-A1- 19 904 496
- US-A- 4 342 796
- US-A- 4 383 062
- US-A- 5 965 664
- US-B1- 6 174 461
- DATABASE WPI Section Ch, Week 199244 Derwent Publications Ltd., London, GB; Class D22, AN 1992-362538 XP002380452 & JP 04 265284 A (TOYO INK MFG CO) 21. September 1992 (1992-09-21)
- DATABASE WPI Section Ch, Week 198810 Derwent Publications Ltd., London, GB; Class E11, AN 1988-067536 XP002358173 & JP 63 021271 A (NIPPON UNICAR CO LTD) 28. Januar 1988 (1988-01-28)
- PATENT ABSTRACTS OF JAPAN Bd. 016, Nr. 061 (C-0910), 17. Februar 1992 (1992-02-17) & JP 03 257054 A (SHIN ETSU CHEM CO LTD), 15. November 1991 (1991-11-15) -& DATABASE WPI Section Ch, Week 199201 Derwent Publications Ltd., London, GB; Class A93, AN 1992-003546 XP002380455 & JP 03 257054 A (SHINETSU CHEM IND CO LTD) 15. November 1991 (1991-11-15)
- CHEMICAL ABSTRACTS + INDEXES, AMERICAN CHEMICAL SOCIETY. COLUMBUS, US, Bd. 112, Nr. 20, 1990, XP000151664 ISSN: 0009-2258 & JP 01 246164 A (NISSAN CHEM IND LTD) 2. Oktober 1989 (1989-10-02)

## Beschreibung

Die vorliegende Erfindung betrifft ein Mittel mit korrosionsinhibierender Wirkung, dessen Verwendung und ein Verfahren zur Verminderung aktiver Korrosion der Stahlarmierung in Beton. Weiterhin betrifft die Erfindung einen Beton, der unter Einsatz eines solchen Mittels erhältlich ist.

Obwohl Stahlbeton gemeinhin als sehr dauerhaft gilt, treten sichtbare Schäden an Betonbauwerken, welche auf Korrosion der Stahlarmierung zurückzuführen sind, mitunter schon wenige Jahre nach Erstellung des Bauwerkes auf, obgleich die Lebensdauer eines Stahlbetonbauwerks gewöhnlich mit 100 Jahren geplant wird. Oft treten sichtbare Schäden an der Stahlarmierung schon nach weniger als 20 Jahren auf. Teure Instandsetzungsarbeiten sind die Folge. Es besteht daher ein ausgesprochen hoher Bedarf an wirksamen Korrosionsinhibitoren für Stahlbeton.

In der Vergangenheit wurden verschiedene Ansätze hierzu unternommen:

Verwendung finden heutzutage hauptsächlich korrosionsinhibierende Betonzusatzstoffe wie Alkali- oder Erdalkalinitrite (US 3 210 207, US 3 801 338, US 3 976 494, US 4 092 109 und US 4 365 999). Neben ihrer ökologischen wie auch toxikologischen Bedenklichkeit zeigen sie den Nachteil, dass sie wasserlöslich sind und aus Baustoffen mit mineralischem Bindemittel auf Zementbasis leicht ausgewaschen werden können.

Weiterhin werden Alkanolamine (US 4 726 914) in Mischung mit drei oder vierwertigen Alkoholen zum Schutz von Stahloberflächen beschrieben. Nicht beschrieben wird allerdings die Verwendung solcher Stoffe in mineralischen Baustoffen mit zementbasiertem Bindemittel.

In EP 0 209 978 A2 werden wassermischbare Korrosionsinhibitoren auf Basis von Hydroxylaminen für den Schutz der Stahlarmierung in Beton beschrieben.

CH 686 368 betrifft ebenfalls wasserlösliche Korrosionsinhibitoren auf Basis von Hydroxylaminen, diese werden in Abgrenzung zu EP 0 209 978 A2 jedoch vor Einsatz als Korrosionsinhibitor für Stahlbeton mit Carbonsäuren umgesetzt um die Flüchtigkeit dieser Stoffe zu vermindern. Bedenkt man jedoch den hohen pH-Wert von zementgebundenen Baustoffen wie Beton, so ist diese Maßnahme allerdings eher zweifelhaft, da nach allgemein chemischem Verständnis bei hohem pH das freie Amin rückgebildet wird.

Unzweifelhaft ist, dass Hydroxylamine die Korrosion an Stahloberflächen reduzieren können. Das belegen beispielsweise die in den genannten Schriften vorgelegten Korrosionsstrommessungen.

Eine Minderung der Korrosion ist im Allgemeinen nur denkbar, wenn der Korrosionsinhibitor dem Bindemittel zugegeben wird. Er muss also schon während der Herstellung des Baustoffes eingesetzt werden. Nachteilig ist in diesem Zusammenhang, dass die Zumischung des Korrosionsinhibitors die rheologischen Eigenschaften des zementgebundenen Baustoffs, z. B. Beton, verändert, was die Komplexität heutiger Mischungen erhöht und daher in der Regel nicht erwünscht ist. Zudem führen die Wasserlöslichkeit sowie der Dampfdruck der als Korrosionsinhibitoren verwendeten Stoffe zu einer unerwünschten Mobilität in der Zementmatrix.

Auch über Auswaschung kann der Wirkstoff verloren gehen. In der Publikation mit dem Titel "Migrating Corrosion Inhibitor Blend for Reinforced Concrete Part 2 - Inhibitor as Repair Strategy" (Corrosion-Vol. 56, No.7, Seite 727 ff.) wurde nachgewiesen, dass die Einwirkung von wasserlöslichen Korrosionsinhibitoren nach CH 686 368 auf die Oberfläche von Stahl, der sich in einer Zementmatrix befindet nicht eindeutig einen positiven Effekt auf die messbaren Korrosionsströme nach sich zieht. Als Ursache hierfür ist mit hoher Wahrscheinlichkeit die Tatsache verantwortlich, dass der Korrosionsinhibitor nicht in genügendem Masse durch die Zementmatrix diffundieren kann, sodass eine für einen korrosionsmindernden Effekt genügende Konzentration an Inhibitor nicht bis an die Stahloberfläche gelangen kann, obwohl der Inhibitor in hoher Konzentration (10 %) über mehrere Wochen einwirken konnte. Derartig lange Einwirkzeiten sind zudem unpraktikabel. Bei der Oberflächenbehandlung von Beton, beispielsweise bei Hydrophobierungsmaßnahmen im Rahmen des Bautenschutz betragen die Kontaktzeiten nur wenige Minuten (flüssige Imprägniermittel) bis einige Stunden (pastöse Imprägniermittel).

Es ist festzustellen, dass es derzeit keinen Korrosionsinhibitor für Stahlarmierungen in zementgebundenen mineralischen Baustoffen (Beton) gibt, der bei bestehenden Strukturen auf die Baustoffoberfläche aufgetragen werden kann und die Korrosion der Stahlarmierung bei bestehender aktiver Korrosion verhindert.

Es bestand daher die Aufgabe, einen Korrosionsinhibitor für Stahlbeton bereitzustellen, der gegebenenfalls auf bestehende Betonstrukturen aufgebracht oder auch der Betonmischung zugegeben werden kann und Korrosionsströme an der Stahlarmierung wirksam dämpft, insbesondere auch dann, wenn vorhandene Chloride und andere Schadstoffe schon Korrosion ausgelöst haben.

Die Aufgabe wurde erfindungsgemäß entsprechend den Merkmalen der Patentansprüche gelöst.

Überraschenderweise wurde gefunden, dass eine Zubereitung, d. h. ein Mittel auf Basis von Alkylalkoxysilanen bei Applikation eine deutliche Reduzierung der Korrosionsströme gemessen an der Stahlarmierung in Beton bewirkt, selbst dann, wenn der Beton durch eingedrungene Chloride vorgeschädigt ist.

So wurde auch gefunden, dass bestimmte organofunktionelle Silane, so genannte Alkylalkoxysilane, gegebenenfalls in Kombination mit Aminogruppen tragenden Verbindungen, die in Alkylalkoxysilanen löslich sein können, wie beispielsweise bestimmte Aminosilane oder bestimmte Aminoalkohole und gegebenenfalls in Kombination mit in Alkylalkoxysilanen löslichen Carbonsäuren oder Salzen von Carbonsäuren, vorzugsweise Dinonylnaphthalinsulfonsäure, oder der Erdalkalisalze, insbesondere Calcium-Dinonylnaphthalinsulfonat oder Magnesium-Dinonylnaphthalinsulfonat, oder entsprechend löslichen Mineralsäuren, durch Einwirkung auf die Oberfläche stahlarmierter zementgebundener Baustoffe oder durch direktes Einbringen eines erfindungsgemäßen Mittels, d. h. des vorliegenden Mittels in die Betonmischung bei der Betonzubereitung, Korrosionsströme an der Stahlarmierung nachhaltig vermindern können und sogar bestehende, beispielsweise durch Chloride ausgelöste Korrosion drastisch mindern können.

Zu bevorzugen sind dabei Alkylalkoxysilane mit einem besonders niedrigen Chloridgehalt. Vorzugsweise setzt man besagte Silane mit einem Chloridgehalt von weniger als 100 Gew.-ppm ein, besonders vorzugsweise solche mit weniger als 50 Gew.-ppm Chlorid, ganz besonders vorzugsweise mit weniger als 10 Gew.-ppm Chlorid. Insbesondere unter Verwendung von Alkylalkoxysilanen, die im Wesentlichen frei von Chlorid sind, d. h. Silaneprodukte mit weniger als 3 Gew.-ppm Chlorid, kann man ausgezeichnete Ergebnisse im Sinne der vorliegenden Erfindung erzielen.

So kann in vorteilhafter Weise eine Reduzierung der an der Stahlarmierung beobachteten Korrosionsströme gegenüber entsprechendem ungeschütztem Beton um mehr als 50 %, vorzugsweise mehr als 80 %, besonders bevorzugt mehr als 90 %, gefunden werden.

Die über Korrosionsstrommessung gefundene überraschend hohe Korrosionsinhibierung wird erfindungsgemäß durch Alkylalkoxysilane, bevorzugt Isobutyltriethoxysilan, Octyltriethoxysilan, gegebenenfalls in Abmischung mit Aminogruppen tragenden Verbindungen, wie Aminosilanen, bevorzugt Aminopropyltriethoxysilan, oder Aminoalkoholen, bevorzugt Diethylaminoethanol, die mit dem verwendeten Silansystem mischbar sind, und/oder gegebenenfalls in Abmischung mit langkettigen Carbonsäuren oder deren Calcium- oder Magnesiumsalzen, bevorzugt Calcium-Dinonylnaphthalinsulfonat, sowie gegebenenfalls unter Zusatz weiterer Komponenten, beispielsweise Lösemittel oder Verarbeitungshilfsstoffe, erreicht.

Im Allgemeinen kann man ein erfindungsgemäßes Mittel in einfacher und wirtschaftlichen Weise durch gutes Mischen bzw. Zusammenrühren der erfindungsgemäßen Komponenten herstellen, beispielsweise indem man besagte Organosilane sowie gegebenenfalls weitere Wirkstoffe bzw. Wirkstoffkombinationen und gegebenenfalls ein Verdünnungsmittel oder gegebenenfalls einen Rheologiehilfsstoff zusammenbringt. Beim Mischprozeß gegebenenfalls auftretende leichte Trübungen werden in der Regel abfiltriert.

Das erfindungsgemäße Mittel oder zumindest ein darin enthaltener Wirkstoff ist vorzugsweise niedrigviskos und gut penetrationsfähig. Bevorzugt weist das erfindungsgemäße Mittel oder ein darin enthaltener Wirkstoff, beispielsweise eine Verbindung gemäß Formel I, oder eine entsprechende Wirkstoffkombination eine Viskosikät von 0,8 bis 20 mPa s, besonders vorzugsweise von 1,0 bis 10 mPa s, auf.

Zur Verbesserung der Applikationseigenschaften kann das vorliegende Mittel nach bekannten Verfahren auch als wässrige niedrig- oder hochviskose Emulsion formuliert werden, wobei die Viskosität der Wirkstoffkomposition - Ölphase - hierbei in der Regel unverändert bleibt. Hierbei wird die Formulierung der Wirkstoffe als wässrige Emulsion und Zugabe in das Beton-Anmachwasser Anmachwasser bevorzugt, um eine möglichst homogene Verteilung zu gewährleisten.

Auch kann das erfindungsgemäße Mittel neben den Wirkstoffkomponenten als zusätzliche Komponenten Lösemittel, Verdünnungsmittel bzw. Lösungsvermittler, wie Mineralöl, Benzinkohlenwasserstoffe, Alkohole, insbesondere Methanol, Ethanol, n-Propanol, i-Propanol, n-Butanol, i-Butanol, sek.-Butanol, t-Butanol, ferner Diisotridecyladipat, Wasser, Emulgatoren, Rheologiehilfsstoffe, gegebenenfalls auch Verdickungshilfsmittel, wie feinteiligen Ton, Fällungskieselsäure, pyrogene Kieselsäure, oder ein entsprechende Gemisch daraus enthalten.

Gegenstand der vorliegenden Erfindung ist daher ein Mittel zum Schutz von Stahlbeton gegen Korrosion der Stahlarmierung, das dadurch gekennzeichnet ist, dass das Mittel als Komponente A mindestens ein Alkylalkoxysilan umfassend n-C₃H₇Si(OC₂H₅)_{3,} iso-C₃H₇Si(OC₂H₅)_{3,} n-C₄H₉Si(OC₂H₅)_{3,} iso-C₄H₉Si(OC₂H₅)_{3,} n-C₅H₁₁Si(OC₂H₅)_{3,} iso-C₅H₁₁Si(OC₂H₅)_{3,} n-C₆H₁₃Si(OC₂H₅)_{3,} iso-C₆H₁₃Si(OC₂H₅)_{3,} n-C₈H₁₇Si(OC₂H₅)_{3,} iso-C₈H₁₇Si(OC₂H₅)_{3,} n-C₁₀H₂₁Si(OC₂H₅)_{3,} iso-C₁₀H2₁Si(OC₂H₅)_{3,} n-C₁₆H₃₃Si(OC₂H₅)_{3,} iso-C₁₆H₃₃Si(OC₂H₅)₃ oder ein Gemisch aus den genannten Alkylalkoxysilanen enthält
und
als Komponente D HO-CH₂-CH₂-N(CH₃)₂ oder HO-CH₂-CH₂-N(C₂H₅)₂ oder ein Gemisch daraus enthält.

Mittel enthaltend als Komponente A, n-C3H7Si(OC2H5)3, i-C3H7Si (OC2H5)3, n-C4H9Si(OC2H5)3, i-CH9Si(OC2H5)3, n-C5H11Si(OC2H5)3, i-C5H11Si(OC2H5)3, n-C6H13Si(OC2H5)3, i-C6H13Si(OC2H5)3, i-C8H17Si(OC2H5)3, i-C8H17Si(OC2H5)3, n-C10H21Si(OC2H5)3, i-C10H21Si(OC2H5)3, n-C16H33Si(OC2H5)3, i-C16H33Si(OC2H5)3 aus einem oder mehreren der genannten Alkylalkoxysilane oder ein Gemisch aus den genannten Alkylalkoxysilanen,

Das Mittel kann als weitere Komponente mindestens eine Aminogruppen tragende Verbindung enthalten.

Das Mittel kann als als Komponente B mindestens ein Aminosilan oder Aminosiloxan der allgemeinen Formel (II)

R⁴₂N-(R⁵-NR)ₐ-R⁶-Si(R⁷)_{b}O_{c}(OR⁸)_{d} (II),

worin
Gruppen R⁴ gleich oder verschieden sind und
R⁴ für einen Wasserstoff oder eine lineare oder verzweigte Alkylgruppe mit 1 bis 20 C-Atomen steht,
R⁵ eine lineare oder verzweigte Alkylengruppe mit 1 bis 20 C-Atomen,
R⁶ eine lineare oder verzweigte Alkylengruppe mit 1 bis 20 C-Atomen,
R⁷ eine lineare oder verzweigte Alkylgruppe mit 1 bis 4 C-Atomen und
R⁸ einen Wasserstoff oder eine lineare oder verzweigte Alkylgruppe mit 1 bis 4 C-Atomen, wobei Gruppen R8 gleich oder verschieden sein können,
darstellen,
   a gleich 0, 1, 2, 3 oder 4,
   b gleich 0, 1 oder 2,
   c gleich 0,0 bis 1,5,
   d gleich 0, 1, 2 oder 3 und
(b+2c+d) = 3 sind,
oder ein Gemisch daraus enthalten.

Das Mittel kann vorzugsweise die Komponente B in einer Menge von 0 bis 60 Gew.-%, bezogen auf die Komponente A, enthalten, bevorzugt von 0,01 bis 10 Gew.-%, besonders bevorzugt von 1 bis 5 Gew.-%, bezogen auf die Komponente A.

Das Mittel kann als Komponente B NH2(CH2)3Si(OC2H5)3, NH2(CH2)3Si(OCH3)3, NH2(CH2)3SiCH3(OC2H5)2, NH2(CH2)3SiCH3(OCH3)2, NH2(CH2)2NH(CH2)3Si(OC2H5)3, NH2(CH2)2NH(CH2)3Si(OCH3)3, NH2(CH2)2NH(CH2)2NH(CH2)3Si(OC2H5)3, NH2(CH2)2NH(CH2)2NH(CH2)3Si(OCH3)3, NH2(CH2)2N[NH2(CH2)2](CH2)3Si(OCH3)3, NH2(CH2)2NH(CH2)3Si(CH3)(OCH3)2, NH2(CH2)2NH(CH2)3Si(CH3)(OC2H5)3, C4H9NH(CH2)3Si(OC2H5)3, C4H9NH(CH2)3Si(OCH3)3, [(C2H5O)3Si(CH2)3]2NH, [(C2H5O)3Si(CH2)3]3N, [(CH3O)3Si(CH2)3]2NH, [(CH3O)3Si(CH2)3]3N oder Partialkondensate aus einem oder mehreren der genannten Aminoalkylalkoxysilane oder ein Gemisch aus den genannten Aminoalkylalkoxysilanen, ein Gemisch aus den Partialkondensaten oder ein Gemisch aus Aminoalkylalkoxysilanen und Partialkondensaten enthalten.

Vorzugsweise enthält das Mittel als Komponente C mindestens eine Carbonsäure oder das Salz einer Carbonsäure.

Das Mittel kann als Komponente C Dinonylnaphthalinsulfonsäure oder deren Erdalkalisalze oder ein Gemisch daraus enthalten.

Vorzugsweise enthält das Mittel die Komponente C in einer Menge von 0 bis 50 Gew.-%, bezogen auf die Komponente A, insbesondere in einer Menge von 0,01 bis 10 Gew.-%, vorteilhaft in einer Menge von 0,5 bis 5 Gew.-%.

Das Mittel enthält die Komponenten A und D oder die Komponenten A, B und D oder die Komponenten A, B, C und D als Wirkstoffe bzw. Wirkstoffkombinationen zur Inhibierung der Korrosion an Stahlarmierungen in Stahlbeton.

In dem Mittel können die Komponenten A, B, C und/oder D als Ölphase einer niedrig- oder hochviskosen wässrigen Emulsion eingesetzt werden.

Das Mittel selbst oder ein darin enthaltener Wirkstoff oder die darin enthaltene Wirkstoffkombination ist niedrigviskos.

Das Mittel kann als zusätzliche Komponenten Diisotridecytadipat, Mineralöl, Benzinkohlenwasserstoffe, Alkohole, Wasser, Emulgatoren, Rheologiehitfsstoffe, Verdickungshilfsmittel oder ein Gemisch daraus enthalten.

Weiterhin ist Gegenstand der vorliegenden Erfindung die Verwendung des erfindungsgemäßen Mittels zum Schutz von Stahlbeton gegen Korrosion der Stahlarmierung.

Gegenstand der Erfindung ist auch die Verwendung eines Mittels zur Inhibierung von Korrosion an Stahlarmierungen in Beton, indem man das Mittel dem Beton während des Herstellprozesses beimischt.

In der Regel weisen erfindungsgemäße Mittel auch eine ausgezeichnete Lagerbeständigkeit auf.

Die Applikation des in niedrigviskoser bis hochviskoser Form, d. h. pastöser Form, oder zusätzlich in emulgierter Form vorliegenden erfindungsgemäßen Mittels kann vorteilhaft durch Sprühen, Streichen, Rollen oder Rakeln erfolgen. Dabei trägt man das erfindungsgemäße Mittel geeigneterweise in einer Menge von mehr als 50 g/m², vorzugsweise mehr als 100 g/m², besonders vorzugsweise mehr als 200 g/m², auf die Betonoberfläche auf. Gegebenenfalls kann eine Mehrfachapplikation mit einer Trocknungszeit von beispielsweise 2 Stunden bis ca. 2 Tagen zwischen den Arbeitsgängen angebrächt sein, insbesondere wenn die gewünschte Wirkstoffmenge aufgrund einer nur geringen Saugfähigkeit des Substrats nicht in einem Arbeitsgang aufgebracht werden kann.

Somit ist auch Gegenstand der vorliegenden Erfindung ein Verfahren zur Verminderung von Korrosion an Stahlarmierungen in Stahlbeton, das dadurch gekennzeichnet ist, dass man ein erfindungsgemäßes Mittel auf eine Stahlbetonoberfläche aufbringt.

Die Applikation des Mittels erfolgt z.B. durch Sprühen, Streichen, Rollen oder Rakeln.

Das Mittel wird vorzugsweise in einer Menge von mehr als 50 g/m² auf die Betonoberfläche aufgetragen, insbesondere wird das Mittel in einer Menge von mehr als 100 g/m² auf die Betonoberfläche aufgetragen, weiter bevorzugt in einer Menge von mehr als 200 g/m².

Man kann das erfindungsgemäße Mittel aber auch direkt bei der Zubereitung einer Betonmischung in den noch nicht abgebundenen Beton einbringen.

Gegenstand der vorliegenden Erfindung ist daher ebenfalls die Verwendung eines erfindungsgemäßen Mittels zur Inhibierung von Korrosion an Stahlarmierungen in Beton, indem man das erfindungsgemäße Mittel dem Beton während des Herstellprozesses beimischt. Hierbei kann sich insbesondere die Zugabe einer wasserbasierenden Wirkstoffemulsion in das Anmachwasser des Betons bewähren. Bezogen auf das Zementgemisch setzt man vorzugsweise 0,5 bis 3 Gew.-% Wirkstoff, d. h. erfindungsgemäßes Mittel, ein.

Weiterhin ist Gegenstand der Erfindung ein gegen Korrosion von Stahlarmierungen geschützter Beton, der nach mindestens einem der Ansprüche 20 bis 26 erhältlich ist.

Alkylalkoxysilane werden gewöhnlich für die Imprägnierung (Hydrophobierung) von porösen, mineralischen Baustoffen eingesetzt. Ziel bei dieser Maßnahme ist dabei das Femhalten von Wasser und darin gelöster Schadstoffe, wie beispielsweise Chloride. Bei der vorliegenden Erfindung wurde demgegenüber in überraschender und vorteilhafter Weise erkannt, dass durch Einsatz spezieller alkylalkoxysilan haltiger Mittel die anhand von Korrosionsströmen feststellbare Korrosion an Stahlarmierungen in zementgebundenen mineralischen Baustoffen deutlich gemindert werden kann, insbesondere, dass bestehende Korrosion durch den Einsatz des vorliegenden Mittels gestoppt oder zumindest wirksam gedämpft werden kann.

Ferner wurde gefunden, dass man in erfindungsgemäßer Weise durch Aufbringen eines vorliegenden flüssigen Inhibitorsystems auf Betonoberflächen Korrosionsströme an der Stahlarmierung deutlich senken kann, selbst bei bestehender aktiver Korrosion und selbst bei einem durch Risse geschädigtem Beton. Die flüssige Inhibitorformulierung kann direkt auf die Betonoberfläche aufgetragen werden. Als Auftragsmethoden eignen sich bekannte Verfahren wie Sprühen, Spritzen, Gießen, Rollen, Pinseln und dergleichen. Die Inhibitorformulierung kann auch mittels an sich bekannten Verfahren als Emulsion formuliert und entsprechend appliziert werden. Geeigneterweise wird eine solche Emulsion auf die Betonoberfläche mittels der oben beschriebenen, bekannten Verfahren aufgetragen, wobei pastöse, hochviskose Emulsionen auch aufgerakelt werden können. Es ist in der Regel darauf zu achten, dass eine genügende Produktmenge in den Beton eindringen kann, um eine hinreichende Schutzwirkung zu erzielen. Eine ausreichende Schutzwirkung wird im Allgemeinen erreicht, wenn die messbaren Korrosionsströme vorzugsweise um mehr als 80 % gegenüber der ungeschützten Fläche zurückgehen. Eine solche Schutzwirkung wird in der Regel mit den erfindungsgemäßen Inhibitorsystemen erreicht, wenn die Auftragsmenge bevorzugt mehr als 200 g/m² beträgt. Dabei ist im Allgemeinen sicherzustellen, dass das gesamte aufgetragene Material in den Beton eindringt. Besonders empfehlenswert ist hierbei ein Mehrfachauftrag oder die Applikation hochviskoser erfindungsgemäßer Produkte, wie pastöse Emulsionen oder durch Rheologiehilfsmittel angedickte Inhibitormittel. Zum Andicken des Inhibitormittels eignen sich beispielsweise feinteilige feste Stoffe, wie Flammkieselsäure, pyrogene Kieselsäure oder bestimmte feinteilige Tonminerale, wie Kaolin. Bei Verwendung eines hochviskosen erfindungsgemäßen Mittels kann in einem Arbeitsgang auch auf senkrechten Flächen mehr als 200 g/m² auch ohne größere Produktverluste durch Ablaufen aufgebracht werden.

Die vorliegende Erfindung wird durch die nachfolgenden Beispiele und Vergleichsbeispiele näher erläutert.

### Beispiele

### Korrosionsstrommessungen:

Die Korrosionsstrommessungen können mittels bekannter Verfahren, wie zum Beispiel die lineare Polarisationsmethode, vorgenommen werden. Dieses Verfahren eignet sich insbesondere für Messungen auf Baustellen, da die Messapparatur tragbar ist (z. B. Gecor 6, James Instruments Inc.).

Im Labor lässt sich die Wirksamkeit der Inhibitorlösungen folgendermaßen ermitteln:
Herstellung spezieller, stahlarmierter Betonprüfkörper
Applikation des Inhibitormittels
Zyklische Salzwasserlagerung
Messung der Korrosion durch Messung der Spannung zwischen den Stahlarmierungen über einen 10 Ohm Widerstand.

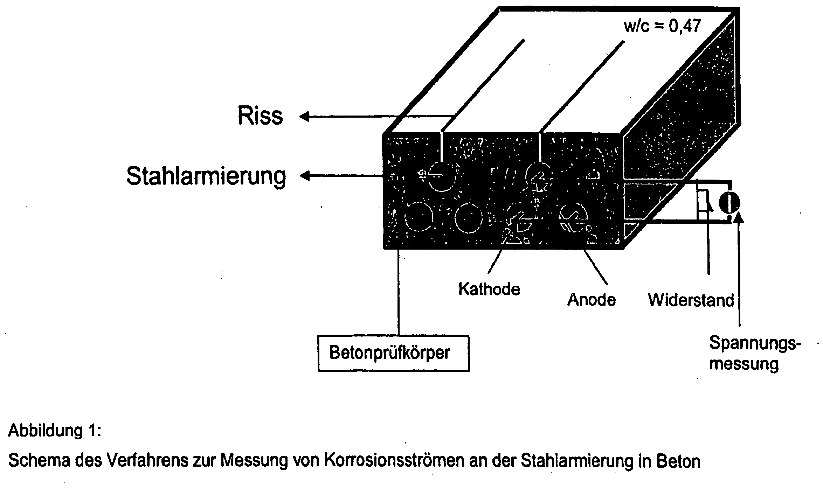

Das Messverfahren, vgl. Abb. 1, ist konzipiert in Anlehnung an Verfahren, die bei FHWA (Federal Highway Administration, USA) üblich sind. Das Messverfahren kann praxisnäher gestaltet werden, indem in die Betonprüfkörper künstliche Mikrorisse eingebracht werden, die bis auf die Stahlarmierung reichen.

Das Wasser-/Zementverhältnis der verwendeten Betonprüfkörper betrug 0,47. Die künstlichen Risse können durch Einlegen von Edelstahlblechen mit einer Dicke von 0,03 mm während der Herstellung der Prüfkörper erreicht werden. Die Bleche wurden in der Regel vor der vollständigen Aushärtung des Betons entfernt, sodass ein Riss, der bis auf die Stahlarmierung reicht und die gesamte Länge der Stahlarmierung umfasst, entsteht. Die Fläche eines jeden Armierungsstabs beträgt im Allgemeinen 126 mm². Der Gewichtsverlust der Stahlarmierung durch Korrosion ist direkt proportional zum Korrosionsstrom, der über die gemessene Spannung mittels Ohm'schen Gesetz bestimmt wird. Die gemessene Spannung bzw. der daraus bestimmte Korrosionsstrom kann daher als direktes Maß für die aktuelle Korrosion angesehen werden. So bedeutet beispielsweise eine Reduzierung der gemessenen Spannung um 10 % eine Reduzierung der durch Korrosion verloren gehenden Menge an Eisen pro Zeiteinheit um ebenfalls 10 %. Um schnell zu messbaren Resultaten zu gelangen und um die Verhältnisse in der Realität zu simulieren, wurden die Prüfkörper einem zyklischen Lagertest in Salzwasser (15 Gew.-% NaCl Lösung in Wasser) unterzogen. Das simuliert beispielsweise die Belastung realer Betonstrukturen mit Tausalzen oder Meerwasser. Die Testzyklen wurden 48 Wochen lang ausgeführt. Ein Testzyklus bestand aus 4 Tagen Salzwasserlagerung bei ca. 20 °C (hierzu wurden die Prüfkörper nur an der Oberfläche, an der sich die künstlichen Risse befanden mit Salzwasser in Kontakt gebracht) und drei Tagen Trocknung bei ca. 40 °C. In den Beton eindringendes Chlorid schädigt die Passivschicht der Stahlarmierung und führt im Laufe des Tests zu einer deutlichen Erhöhung der messbaren Korrosionsströme. Zusätzlich zu den Korrosionsströmen wurden sämtliche äußerlich erkennbaren optischen Veränderungen an den Probekörpern dokumentiert. Eine rostende Stahlarmierung verursacht im Test wie auch in der Praxis Deaminierung, Rissbildung, braune Rostschlieren an der Oberfläche bis hin zur vollständigen Zerstörung des Prüfkörpers. Innerhalb der Testdauer von 48 Wochen werden also die Verhältnisse simuliert, die in der Praxis innerhalb von ca. 20 bis 50 Jahren (je nach Belastung) auftreten. Der gewählte Test ist damit ausgesprochen praxisorientiert. Nach Testende wurden die Stahlarmierungen der Prüfkörper freigelegt und auf Korrosion untersucht. Ungeschützter Beton zeigt schon nach 12 Wochen von außen erkennbare Korrosionsspuren. Die freigelegten Armierungseisen waren schwerwiegend korrodiert. Die mit dem beanspruchten Verfahren behandelten Betonprobekörper wiesen sogar nach Testende (48 Wochen) äußerlich keinerlei Korrosionsspuren auf und an den freigelegten Armierungseisen waren keine oder unwesentliche Korrosionsspuren erkennbar. In einer Testreihe konnte nachgewiesen werden, dass das beanspruchte Verfahren zur Korrosionsinhibition auch auf schon mit Chlorid vorgeschädigtem Beton wirkt. Hierzu wurde ein Prüfkörper der zyklischen Salzwasserlagerung unterzogen bis eine deutliche Korrosion festzustellen war. Anschließend wurde die rissgeschädigte, mit Chlorid belastete Oberfläche nach dem beanspruchten Verfahren behandelt. Der Testzyklus wurde mit dem nunmehr behandelten Prüfkörper fortgeführt. Überraschenderweise wurde festgestellt, dass auch bei diesen extrem harten Testbedingungen die gemessenen Korrosionsströme drastisch zurückgehen. Das bedeutet: Rissgeschädigter, chloridbelasteter Beton kann mit dem beschriebenen Verfahren effektiv vor Korrosion der Stahlarmierung geschützt werden.

### Formulierung der Inhibitormischung und Applikation:

Alkylalkoxysilane werden gegebenenfalls mit aminofunktionellen Verbindungen und Carbonsäuren oder Salzen von Carbonsäuren gemischt. Das resultierende Gemisch ist einphasig. Gegebenenfalls wird zur Unterstützung gerührt und geheizt. Mischzeiten von 1 Minute bis zu mehreren Stunden in einem Temperaturbereich zwischen 20 °C und dem Siedebeginn des Alkylalkoxysilangemischs (bis ca. 180°C) haben sich bewährt. Dabei können chemische Reaktionen ablaufen. Exemplarisch seien hier genannt:

**R-Si(OR¹)₃ + n(C₂H₅)NC₂H₄OH → R-Si(OR¹)₃₋ₙ[(C₂H₅)NC₂H₄O]ₙ + nR¹OH**

**R-Si(OR¹)₃ + nR²COOH → R-Si(OR¹)₃₋ₙ(R²COO)ₙ + nR¹OH**

Das resultierende einphasige Gemisch ist in der Regel flüssig und niedrigviskos (Viskosität üblicherweise < 10 mPa s, beispielsweise < 5 mPa s, insbesondere < 1,5 mPa s). Zur Einstellung der Viskosität kann zusätzlich ein Lösungsmittel verwendet werden. Geeignete Lösemittel sind beispielsweise Alkohole, bevorzugt Ethanol, Methanol oder Isopropanol oder Benzinkohlenwasserstoffe wie Leichtbenzin oder Lösungspetroleum. Das flüssige Inhibitorgemisch wird entweder direkt auf die Betonoberfläche aufgetragen oder nach bekannten Verfahren als Öl in Wasser Emulsion formuliert und in Form der wässrigen Emulsion auf die Betonoberfläche aufgetragen. Im Falle wässriger Emulsionen können neben niedrigviskosen auch hochviskose Emulsionen angewendet werden. Hochviskose Emulsionen können in einigen Fällen vorteilhaft sein, insbesondere dann, wenn in einem Applikationsgang eine hohe Produktmenge aufgetragen werden soll. Wichtig für das beschriebene Verfahren ist, dass eine genügende Wirkstoffmenge (nicht Lösemittel, nicht kontinuierliche Phase bei Emulsionen = Wasser) in den Beton eindringt. Um dies zu erreichen, hat sich die Mehrfachapplikation bewährt, das bedeutet, dass die Inhibitorformulierung mehrfach auf die Betonoberfläche aufgebracht wird. Dabei ist auf angemessene Trocknungszeiten zu achten. Die Oberfläche muss zumindest trocken aussehen, bevor mit dem nächsten Auftrag begonnen wird. Diese Vorgehensweise wird so lange wiederholt, bis die gewünschte Produktmenge vom Substrat (Beton) aufgenommen wurde. Bei normalem Beton sind in der Praxis 1 bis 6 Einzelauftragungen erforderlich, um eine Gesamtmenge des Inhibitorwirkstoffs von mindestens 150 g/m² aufzunehmen. Die Anzahl der Einzelapplikationen ist abhängig von der Porosität des Betons. Je dichter der Beton, desto mehr Einzelapplikationen sind erforderlich. Die Porosität der Bindemittelphase von Beton wird durch das Wasser/Zement Verhältnis (w/c) charakterisiert. Je niedriger der w/c-Wert desto dichter ist die Bindemittelphase des Betons. Besonders bevorzugt ist eine Wirkstoffaufnahme von mehr als 200 g/m², ganz besonders bevorzugt eine Wirkstoffaufnahme von mehr als 400 g/m².

### Beispiel 1

Behandlung von Beton mit einer Mischung aus Isobutyltriethoxysilan und Diethylaminoethanol

980 g Isobutyltriethoxysilan wurden mit 20 g Diethylaminoethanol vermischt und 30 Minuten bei 40 °C gerührt. Die Viskosität des Produktes betrug 1 mPa s.

Mit künstlichen Rissen versehene, stahlarmierte ca. 65 Tage alte Betonprobekörper entsprechend Abb. 1 (30 x 30 x 18 cm) wurden an der Oberseite, an der sich längs zur Stahlarmierung verlaufende Risse befinden mit dem oben beschriebenen, flüssigen, niedrigviskosen Korrosionsinhibitor behandelt. Hierzu wurde die Oberfläche dreimal mit jeweils einer Auftragsmenge von 180 g/m² besprüht. Die Trocknungszeit zwischen den einzelnen Sprühapplikationen betrug jeweils 45 Minuten. Anschließend wurde die behandelte Betonoberfläche mit einer Plexiglasumrandung versehen. Die Plexiglasumrandung wurde zum Beton hin mit einer plastischen Dichtmasse abgedichtet. In die so entstandene Wanne wurde wässrige 15 gew.-%ige NaCl-Lösung gefüllt. Der Makrozellen-Korrosionsstrom wurde mit Hilfe des Ohm'schen Gesetzes über den gemessenen Spannungsabfall am 10 Ohm Widerstand, der zwischen der oberen und unteren Lage der Stahlarmierung geschaltet war bestimmt. Jeweils nach 4 Tagen Salzwasserbelastung bei ca. 20 °C wurde die Salzlösung entfernt und der Betonprobekörper 3 Tage bei ca. 40 °C getrocknet. Anschließend wurde wiederum NaCl in die Plexiglasumrandung gefüllt und damit der nächste Salzbelastungszyklus gestartet. Die Salzbelastungs- und Trocknungszyklen wurden so lange wiederholt bis eine Gesamttestdauer von 48 Wochen erreicht war. Die über den Spannungsabfall am 10 Ohm Widerstand gemessenen Korrosionsströme wurden über den gesamten Testzeitraum dokumentiert.

| Testdauer | 1 Woche | 12 Wochen | 48 Wochen |
|---|---|---|---|
| Korrosionsstrom | 0,1 mA | 0,2 mA | 0,4 mA |

Visuelle Beurteilung des Betonprüfkörpers während des Tests und nach Testende:

| Testdauer | 1 Woche | 12 Wochen | 48 Wochen |
|---|---|---|---|
| Visuelle Beurteilung | Keine Veränderung | Keine Veränderung | Keine Veränderung |

Visuelle Beurteilung der freigelegten Stahlarmierung nach Testende:
Keine signifikanten Korrosionsspuren feststellbar.

### Beispiel 2 (außerhalb der Erfindung)

### Behandlung von Beton mit Isobutyltriethoxysilan

Mit künstlichen Rissen versehene, stahlarmierte ca. 65 Tage alte Betonprobekörper entsprechend Abb. 1 (30 x 30 x 18 cm) wurden an der Oberseite, an der sich längs zur Stahlarmierung verlaufende Risse befinden mit Isobutyltriethoxysilan behandelt. Die Reinheit des Produktes betrug ca. 95 % (GC WLD-Flächenprozent). Die Oberfläche wurde zweimal mit jeweils einer Auftragsmenge von 180 g/m² besprüht. Die Trocknungszeit zwischen den einzelnen Sprühapplikationen betrug jeweils 45 Minuten. Anschließend wurde die behandelte Betonoberfläche mit einer Plexiglasumrandung versehen. Die Plexiglasumrandung wurde zum Beton hin mit einer plastischen Dichtmasse abgedichtet. In die so entstandene Wanne wurde wässrige 15 gew.-%ige NaCl-Lösung gefüllt. Der Makrozellen-Korrosionsstrom wurde mit Hilfe des Ohm'schen Gesetzes über den gemessenen Spannungsabfall am 10 Ohm Widerstand, der zwischen der oberen und unteren Lage der Stahlarmierung geschaltet war bestimmt. Jeweils nach 4 Tagen Salzwasserbelastung bei ca. 20 °C wurde die Salzlösung entfernt und der Betonprobekörper 3 Tage bei ca. 40°C getrocknet. Anschließend wurde wiederum NaCl in die Plexiglasumrandung gefüllt und damit der nächste Salzbelastungszyklus gestartet. Die Salzbelastungs- und Trocknungszyklen wurden so lange wiederholt bis eine Gesamttestdauer von 48 Wochen erreicht war. Die über den Spannungsabfall am 10 Ohm Widerstand gemessenen Korrosionsströme wurden über den gesamten Testzeitraum dokumentiert.

Entwicklung der Korrosionsströme im Testzeitraum:

| Testdauer | 1 Woche | 12 Wochen | 48 Wochen |
|---|---|---|---|
| Korrosionsstrom | 150 mA | 90 mA | 180 mA |

Visuelle Beurteilung des Betonprüfkörpers während des Tests und nach Testende:

| Testdauer | 1 Woche | 12 Wochen | 48 Wochen |
|---|---|---|---|
| Visuelle Beurteilung | Keine Veränderung | Keine Veränderung | Keine Veränderung |

Visuelle Beurteilung der freigelegten Stahlarmierung nach Testende:
Leichte Korrosionsspuren, limitiert auf die Stellen der Stahlarmierung direkt in der Nähe der künstlichen Risse.

### Beispiel 3 (außerhalb der Erfindung)

### Behandlung von Beton mit einer Mischung aus oligomeren Propylsiloxanen und Aminopropyltriethoxysilan

980 g eines oligomeren n-Propylethoxysiloxans mit einem mittleren Molekulargewicht von ca. 600 g/mol und einer Viskosität von 5 mPa s wurden mit 20 g 3-Aminopropyltriethoxysilan vermischt und 30 Minuten bei 40 °C gerührt. Die Viskosität des Produktes betrug danach ca. 5 mPa s.

Mit künstlichen Rissen versehene, stahlarmierte ca. 65 Tage alte Betonprobekörper entsprechend Abb. 1 (30 x 30 x 18 cm) wurden an der Oberseite, an der sich längs zur Stahlarmierung verlaufende Risse befinden mit dem oben beschriebenen, flüssigen, niedrigviskosen Korrosionsinhibitor behandelt. Hierzu wurde die Oberfläche dreimal mit jeweils einer Auftragsmenge von ca. 200 g/m² besprüht. Die Trocknungszeit zwischen den einzelnen Sprühapplikationen betrug jeweils 90 Minuten. Anschließend wurde die behandelte Betonoberfläche mit einer Plexiglasumrandung versehen. Die Plexiglasumrandung wurde zum Beton hin mit einer plastischen Dichtmasse abgedichtet. In die so entstandene Wanne wurde wässrige 15 gew.-%ige NaCl-Lösung gefüllt. Der Makrozellen-Korrosionsstrom wurde mit Hilfe des Ohm'schen Gesetzes über den gemessenen Spannungsabfall am 10 Ohm Widerstand, der zwischen der oberen und unteren Lage der Stahlarmierung geschaltet war bestimmt. Jeweils nach 4 Tagen Salzwasserbelastung bei ca. 20 °C wurde die Salzlösung entfernt und der Betonprobekörper 3 Tage bei ca. 40 °C getrocknet. Anschließend wurde wiederum NaCl in die Plexiglasumrandung gefüllt und damit der nächste Salzbelastungszyklus gestartet. Die Salzbelastungs- und Trocknungszyklen wurden so lange wiederholt bis eine Gesamttestdauer von 48 Wochen erreicht war. Die über den Spannungsabfall am 10 Ohm Widerstand gemessenen Korrosionsströme wurden über den gesamten Testzeitraum dokumentiert.

Entwicklung der Korrosionsströme im Testzeitraum:

| Testdauer | 1 Woche | 12 Wochen | 48 Wochen |
|---|---|---|---|
| Korrosionsstrom | 0,1 mA | 0,6 mA | 2,3 mA |

Visuelle Beurteilung des Betonprüfkörpers während des Tests und nach Testende:

| Testdauer | 1 Woche | 12 Wochen | 48 Wochen |
|---|---|---|---|
| Visuelle Beurteilung | Keine Veränderung | Keine Veränderung | Keine Veränderung |

Visuelle Beurteilung der freigelegten Stahlarmierung nach Testende:
Geringe Korrosionsspuren in der Näher der künstlichen Risse.

### Beispiel 4

### Behandlung von Beton mit einer Mischung aus Isobutyltriethoxysilan, Diethylaminoethanol und dem Magnesiumsalz der Dinonylnaphthalinsulfonsäure

960 g Isobutyltriethoxysilan wurden mit 20 g Diethylaminoethanol und 20 g NA-SUL MG/DITA (Magnesium-Dinonylnaphthalinsulfonat in Diisotridecyladipat, Lehmann & Voss & Co.) vermischt und 30 Minuten bei 40 °C gerührt. Die Viskosität des Produktes betrug danach ca. 1,5 mPa s.

Mit künstlichen Rissen versehene, stahlarmierte ca. 65 Tage alte Betonprobekörper entsprechend Abb. 1 (30 x 30 x 18 cm) wurden an der Oberseite, an der sich längs zur Stahlarmierung verlaufende Risse befinden mit dem oben beschriebenen, flüssigen, niedrigviskosen Korrosionsinhibitor behandelt. Hierzu wurde die Oberfläche dreimal mit jeweils einer Auftragsmenge von ca. 150 g/m² besprüht. Die Trocknungszeit zwischen den einzelnen Sprühapplikationen betrug jeweils 60 Minuten. Anschließend wurde die behandelte Betonoberfläche mit einer Plexiglasumrandung versehen. Die Plexiglasumrandung wurde zum Beton hin mit einer plastischen Dichtmasse abgedichtet. In die so entstandene Wanne wurde wässrige 15 gew.-%ige NaCl-Lösung gefüllt. Der Makrozellen-Korrosionsstrom wurde mit Hilfe des Ohm'schen Gesetzes über den gemessenen Spannungsabfall am 10 Ohm Widerstand, der zwischen der oberen und unteren Lage der Stahlarmierung geschaltet war bestimmt. Jeweils nach 4 Tagen Salzwasserbelastung bei ca. 20 °C wurde die Salzlösung entfernt und der Betonprobekörper 3 Tage bei ca. 40 °C getrocknet. Anschließend wurde wiederum NaCl in die Plexiglasumrandung gefüllt und damit der nächste Salzbelastungszyklus gestartet. Die Salzbelastungs- und Trocknungszyklen wurden so lange wiederholt bis eine Gesamttestdauer von 48 Wochen erreicht war. Die über den Spannungsabfall am 10 Ohm Widerstand gemessenen Korrosionsströme wurden über den gesamten Testzeitraum dokumentiert.

Entwicklung der Korrosionsströme im Testzeitraum:

| Testdauer | 1 Woche | 12 Wochen | 48 Wochen |
|---|---|---|---|
| Korrosionsstrom | 0,4 mA | 0,1 mA | 6,4 mA |

Visuelle Beurteilung des Betonprüfkörpers während des Tests und nach Testende:

| Testdauer | 1 Woche | 12 Wochen | 48 Wochen |
|---|---|---|---|
| Visuelle Beurteilung | Keine Veränderung | Keine Veränderung | Keine Veränderung |

### Beispiel 5

### Behandlung von chloridbelastetem Beton mit einer Mischung aus Isobutyltriethoxysilan und Diethylaminoethanol

Betonprobekörper entsprechend Abb. 1 (30 x 30 x 18 cm) wurden an der Oberseite, an der sich längs zur Stahlarmierung verlaufende Risse befanden mit einer Plexiglasumrandung versehen. Die Plexiglasumrandung wurde zum Beton hin mit einer plastischen Dichtmasse abgedichtet. In die so entstandene Wanne wurde wässrige 15 gew.-%ige NaCl-Lösung gefüllt. Der Makrozellen-Korrosionsstrom wurde mit Hilfe des Ohm'schen Gesetzes über den gemessenen Spannungsabfall am 10 Ohm Widerstand, der zwischen der oberen und unteren Lage der Stahlarmierung geschaltet war bestimmt. Jeweils nach 4 Tagen Salzwasserbelastung bei ca. 20 °C wurde die Salzlösung entfernt und der Betonprobekörper 3 Tage bei ca. 40 °C getrocknet. Anschließend wurde wiederum NaCl in die Plexiglasumrandung gefüllt und damit der nächste Salzbelastungszyklus gestartet. Nach 12 Wochen wurde der nunmehr chloridbelastete Beton, der nach den Korrosionsstrommessungen schon deutliche aktive Korrosion der Stahlarmierung zeigte mit einer Inhibitorlösung entsprechend Beispiel 1 behandelt. Das flüssige Produkt wurde dreimal auf die trockene Betonoberfläche aufgetragen. Dabei wurden jeweils 180 g/m² verbraucht. Die Trocknungszeit zwischen den Einzelapplikationen betrug jeweils 45 Minuten. Die Salzbelastungs- und Trocknungszyklen wurden anschließend so lange wiederholt bis eine Gesamttestdauer von 48 Wochen erreicht war. Die über den Spannungsabfall am 10 Ohm Widerstand gemessenen Korrosionsströme wurden über den gesamten Testzeitraum dokumentiert.

Entwicklung der Korrosionsströme im Testzeitraum:

| Testdauer | 1 Woche | 12 Wochen | 48 Wochen |
|---|---|---|---|
| Korrosionsstrom | 548 mA | 292 mA | 15,1 mA |

Nach Applikation des Korrosionsinhibitors gehen die gemessenen Korrosionsströme signifikant zurück.

Visuelle Beurteilung des Betonprüfkörpers während des Tests und nach Testende:

| Testdauer | 1 Woche | 12 Wochen | 48 Wochen |
|---|---|---|---|
| Visuelle Beurteilung | Keine Veränderung | Rostausblühungen | Geringfügige Rostausblühungen |

Visuelle Beurteilung der freigelegten Stahlarmierung nach Testende:
Geringe Korrosion auf der gesamten Oberfläche der Armierungseisen.

### Vergleichsbeispiel 1

### Unbehandelter Beton

Betonprobekörper entsprechend Abb. 1 (30 x 30 x 18 cm) wurden an der Oberseite, an der sich längs zur Stahlarmierung verlaufende Risse befanden mit einer Plexiglasumrandung versehen. Die Plexiglasumrandung wurde zum Beton hin mit einer plastischen Dichtmasse abgedichtet. In die so entstandene Wanne wurde wässrige 15 gew.-%ige NaCl-Lösung gefüllt. Der Makrozellen-Korrosionsstrom wurde mit Hilfe des Ohm'schen Gesetzes über den gemessenen Spannungsabfall am 10 Ohm Widerstand, der zwischen der oberen und unteren Lage der Stahlarmierung geschaltet war bestimmt. Jeweils nach 4 Tagen Salzwasserbelastung bei ca. 20°C wurde die Salzlösung entfernt und der Betonprobekörper 3 Tage bei ca. 40 °C getrocknet. Anschließend wurde wiederum NaCl in die Plexiglasumrandung gefüllt und damit der nächste Salzbelastungszyklus gestartet. Die Salzbelastungs- und Trocknungszyklen wurden so lange wiederholt bis eine Gesamttestdauer von 48 Wochen erreicht war. Die über den Spannungsabfall am 10 Ohm Widerstand gemessenen Korrosionsströme wurden über den gesamten Testzeitraum dokumentiert.

Entwicklung der Korrosionsströme im Testzeitraum:

| Testdauer | 1 Woche | 12 Wochen | 48 Wochen |
|---|---|---|---|
| Korrosionsstrom | 598 mA | 299 mA | 540 mA |

Visuelle Beurteilung des Betonprüfkörpers während des Tests und nach Testende:

| Testdauer | 1 Woche | 12 Wochen | 48 Wochen |
|---|---|---|---|
| Visuelle Beurteilung | Keine Veränderung | Rostausblühungen | Starke Rostausblühungen und Rissbildung |

Visuelle Beurteilung der freigelegten Stahlarmierung nach Testende:
Starke Korrosion auf der gesamten Oberfläche der Armierungseisen.

## Patentansprüche

1. Mittel zum Schutz von Stahlbeton gegen Korrosion der Stahlarmierung,
**dadurch gekennzeichnet,**
**dass** das Mittel als Komponente A mindestens ein Alkylalkoxysilan umfassend n-C₃H₇Si(OC₂H₅)_{3,} iso-C₃H₇Si(OC₂H₅)_{3,} n-C₄H₉Si(OC₂H₅)_{3,} iso-C₄H₉Si(OC₂H₅)_{3,} n-C₅H₁₁Si(OC₂H₅)_{3,} iso-C₅H₁₁Si(OC₂H₅)_{3,} n-C₆H₁₃Si(OC₂H₅)_{3,} iso-C₆H₁₃Si(OC₂H₅)_{3,} n-C₈H₁₇Si(OC₂H₅)_{3,} iso-C₈H₁₇Si(OC₂H₅)_{3,} n-C₁₀H₂₁Si(OC₂H₅)_{3,} iso-C₁₀H2₁Si(OC₂H₅)_{3,} n-C₁₆H₃₃Si(OC₂H₅)_{3,} iso-C₁₆H₃₃Si(OC₂H₅)₃ oder ein Gemisch aus den genannten Alkylalkoxysilanen enthält
und
als Komponente D HO-CH₂-CH₂-N(CH₃)₂ oder HO-CH₂-CH₂-N(C₂H₅)₂ oder ein Gemisch daraus enthält.

2. Mittel nach Anspruch 1,
**dadurch gekennzeichnet,**
**dass** das Mittel als Komponente C Dinonylnaphthalinsulfonsäure oder deren Erdalkalisalze oder ein Gemisch daraus enthält.

3. Mittel nach Anspruch 1 oder 2,
**dadurch gekennzeichnet,**
**dass** das Mittel die Komponente C in einer Menge von 0 bis 50 Gew.-%, bezogen auf die Komponente A, enthält.

4. Mittel nach Anspruch 3,
**dadurch gekennzeichnet,**
**dass** das Mittel die Komponente C in einer Menge von 0,01 bis 10 Gew.-%, bezogen auf die Komponente A, enthält.

5. Mittel nach Anspruch 4,
**dadurch gekennzeichnet,**
**dass** das Mittel die Komponente C In einer Menge von 0,5 bis 5 Gew.-%, bezogen auf die Komponente A, enthält.

6. Mittel nach einem der Ansprüche 1 bis 5.
**dadurch gekennzeichnet,**
**dass** das Mittel als zusätzliche Komponenten Dilsotridecyladipat, Mineralöl, Benzinkohlenwasserstoffe, Alkohole, Wasser, Emulgatoren, Rheologiehilfsstoffe, Verdickungshlifsmittel oder ein Gemisch daraus enthält.

7. Verfahren zur Verminderung von Korrosion an Stahlarmierungen in Stahlbeton, **dadurch gekennzeichnet,**
**dass** man ein Mittel nach einem der Ansprüche 1 bis 6 auf eine Stahlbetonoberfläche aufbringt.

8. Verfahren nach Anspruch 7,
**dadurch gekennzeichnet,**
**dass** die Applikation des Mittels durch Sprühen, Streichen, Rollen oder Rakeln erfolgt.

9. Verfahren nach Anspruch 7 oder 8,
**dadurch gekennzeichnet,**
**dass** man das Mittel in einer Menge von mehr als 50 g/m² auf die Betonoberfläche aufträgt.

10. Verfahren nach Anspruch 9,
**dadurch gekennzeichnet,**
**dass** man das Mittel in einer Menge von mehr als 100 g/m² auf die Betonoberfläche aufträgt.

11. Verfahren nach Anspruch 10,
**dadurch gekennzeichnet,**
**dass** man das Mittel in einer Menge von mehr als 200 g/m² auf die Betonoberfläche aufträgt.

12. Verwendung eines Mittels nach den Ansprüchen 1 bis 6 zur Inhibierung von Korrosion an Stahlarmierungen In Beton, indem man das Mittel dem Beton während des Herstellprozesses beimischt.

13. Verwendung eines Mittels nach den Ansprüchen 1 bis 6, wobei das Mittel die Komponenten A und D oder die Komponenten A, D und C als Wirkstoffe bzw. Wirkstoffkombinationen enthält, zur Inhibierung der Korrosion an Stahlarmierungen in Stahlbeton.

14. Beton dadurch erhältlich, dass man ein Mittel nach einem der Ansprüche 1 bis 6 auf eine Stahlbetonoberfläche aufbringt oder dem Beton während des Herstellprozesses beimischt.

## Claims

1. Composition for protecting steel-reinforced concrete against corrosion of the steel reinforcement,
**characterised in that**
the composition comprises, as component A, at least one alkylalkoxysilane comprising n-C₃H₇Si(OC₂H₅)_{3,} iso-C₃H₇Si(OC₂H₅)_{3,} n-C₄H₉Si(OC₂H₅)_{3,} iso-C₄H₉Si(OC₂H₅)_{3,} n-C₅H₁₁Si(OC₂H₅)_{3,} iso-C₅H₁₁Si(OC₂H₅)_{3,} n-C₆H₁₃Si(OC₂H₅)_{3,} iso-C₆H₁₃Si(OC₂H₅)_{3,} n-C₈H₁₇Si(OC₂H₅)_{3,} iso-C₈H₁₇Si(OC₂H₅)_{3,} n-C₁₀H₂₁Si(OC₂H₅)_{3,} iso-C₁₀H2₁Si(OC₂H₅)_{3,} n-C₁₆H₃₃Si(OC₂H₅)_{3,} iso-C₁₆H₃₃Si(OC₂H₅)₃ or a mixture of the specified alkylalkoxysilanes and,
as component D, HO-CH₂-CH₂-N(CH₃)₂ or HO-CH₂-CH₂-N(C₂H₅)₂ or a mixture thereof.

2. Composition according to Claim 1,
**characterised in that**
the composition comprises, as component C, dinonylnaphthalenesulfonic acid or its alkaline earth salts or a mixture thereof.

3. Composition according to Claim 1 or 2,
**characterised in that**,
the composition contains from 0 to 50% by weight of component C, based on the component A.

4. Composition according to Claim 3,
**characterised in that**
the composition contains from 0.01 to 10% by weight of component C, based on the component A.

5. Composition according to Claim 4,
**characterised in that**
the composition contains from 0.5 to 5% by weight of component C, based on the component A.

6. Composition according to any of Claims 1 to 5,
**characterised in that**,
the composition further comprises, as additional components, diisotridecyladipate, mineral oil, petroleum spirit hydrocarbons, alcohols, water, emulsifiers, rheological auxiliaries, thickeners or a mixture thereof.

7. Process for reducing corrosion of steel reinforcement in steel-reinforced concrete, **characterised in that**,
a composition according to any of Claims 1 to 6 is applied to a steel-reinforced concrete surface.

8. Process according to Claim 7,
**characterised in that**
the composition is applied by spraying, painting, rolling or doctorblade coating.

9. Process according to Claim 7 or 8,
**characterised in that**,
the composition is applied in an amount of more than 50 g/m² to the concrete surface.

10. Process according to Claim 9,
**characterised in that**,
the composition is applied in an amount of more than 100 g/m² to the concrete surface.

11. Process according to Claim 10,
**characterised in that**,
the composition is allied in an amount of more than 200 g/m² to the concrete surface.

12. Use of a composition according to any of Claims 1 to 6 for inhibiting corrosion of steel reinforcement in steel-reinforced concrete by mixing the composition into the concrete during the production process.

13. Use of a composition according to any of Claims 1 to 6, wherein the composition comprises the components A and D or the components A, D and C as active ingredients or active ingredient combinations, for inhibiting corrosion of steel reinforcement in steel-reinforced concrete.

14. Concrete obtainable by applying a composition according to any of Claims 1 to 6 to a steel-reinforced concrete surface or mixing it into the concrete during the production process.

## Revendications

1. Agent de protection de béton armé contre la corrosion de l'armature en acier, **caractérisé en ce que**
l'agent contient en tant que composant A au moins un alkylalcoxysilane comprenant n-C₃H₇Si(OC₂H₅)_{3,} iso-C₃H₇Si(OC₂H₅)_{3,} n-C₄H₉Si(OC₂H₅)₃ iso-C₄H₉Si(OC₂H₅)_{3,} n-C₅H₁₁Si(OC₂H₅)_{3,} iso-C₅H₁₁Si(OC₂H₅)_{3,} n-C₆H₁₃Si(OC₂H₅)_{3,} iso-C₆H₁₃Si(OC₂H₅)_{3,} n-C₈H₁₇Si(OC₂H₅)_{3,} iso-C₈H₁₇Si(OC₂H₅)_{3,} n-C₁₀H₂₁Si(OC₂H₅)_{3,} iso-C₁₀H2₁Si(OC₂H₅)_{3,} n-C₁₆H₃₃Si(OC₂H₅)_{3,} iso-C₁₆H₃₃Si(OC₂H₅)₃ ou un mélange des alkylalcoxysilanes cités
et
en tant que composant D HO-CH₂-CH₂-N(CH₃)₂ ou HO-CH₂-CH₂-N(C₂H₅)₂ ou un de leurs mélanges.

2. Agent selon la revendication 1,
**caractérisé en ce que**
l'agent contient ent tant que composant C de l'acide dinonylnaphtalinesulfonique ou ses sels de métaux alcalins ou un de leurs mélanges.

3. Agent selon la revendication 1 ou 2,
**caractérisé en ce que**
l'agent contient le composant C en une quantité de 0 à 50 % en poids, par rapport au composant A.

4. Agent selon la revendication 3,
**caractérisé en ce que**
l'agent contient le composant C en une quantité de 0,01 à 10 % en poids, par rapport au composant A.

5. Agent selon la revendication 4,
**caractérisé en ce que**
l'agent contient le composant C en une quantité de 0,5 à 5 % en poids, par rapport au composant A.

6. Agent selon l'une quelconque des revendications 1 à 5,
**caractérisé en ce que**
l'agent contient en tant que composants supplémentaires de l'adipate de diisotridécyle, une huile minérale, des hydrocarbures d'essence, des alcools, de l'eau, des émulsifiants, des adjuvants rhéologiques, des adjuvants épaississants ou un de leurs mélanges.

7. Procédé de réduction de la corrosion d'Armatures en acier dans du béton armé, **caractérisé en ce**
**qu'**un agent selon l'une quelconque des revendications 1 à 6 est appliqué sur une surface de béton armé.

8. Procédé selon la revendication 7,
**caractérisé en ce que**
l'application de l'agent a lieu par pulvérisation, peinture, cylindrage ou enduction.

9. Procédé selon la revendication 7 ou 8,
**caractérisé en ce que**
l'agent est applique en une quantité de plus de 50 g/m² sur la surface du béton.

10. Procédé selon la revendication 9,
**caractérisé en ce que**
l'agent est applique en une quantité de plus de 100 g/m² sur la surface du béton.

11. Procédé selon la revendication 10,
**caractérisé en ce que**
l'agent est applique en une quantité de plus de 200 g/m² sur la surface du béton.

12. Utilisation d'un agent selon les revendications 1 à 6 pour l'inhibition de la corrosion d'armatures en acier dans du béton armé, par mélange de l'agent avec le béton pendant le procédé de fabrication.

13. Utilisation d'un agent selon les revendications 1 à 6, l'agent contenant les composants A et D ou les composants A, D et C tant qu'agents actifs ou combinaisons d'agents actifs, pour l'inhibition de la corrosion d'armatures en acier dans du béton armé.

14. Béton, pouvant être obtenu par application d'un agent selon l'une quelconque des revendications 1 à 6 sur une surface de béton armé ou mélange avec le béton pendant le procédé de fabrication.
